(19) Europäisches Patentamt / European Patent Office / Office européen des brevets

(11) **EP 3 010 747 B1**

(12) **FASCICULE DE BREVET EUROPEEN**

(45) Date de publication et mention de la délivrance du brevet:
**14.09.2022 Bulletin 2022/37**

(21) Numéro de dépôt: **14735632.3**

(22) Date de dépôt: **19.06.2014**

(51) Classification Internationale des Brevets (IPC):
**H02P 29/66** (2016.01)

(52) Classification Coopérative des Brevets (CPC):
**B60L 7/28; H02P 29/0022; H02P 29/662;**
**Y02T 10/64**

(86) Numéro de dépôt international:
**PCT/FR2014/051523**

(87) Numéro de publication internationale:
**WO 2014/202908 (24.12.2014 Gazette 2014/52)**

(54) **EQUIPEMENT DE RALENTISSEUR À COURANTS DE FOUCAULT**

AUSRÜSTUNG FÜR WIRBELSTROMRETARDER

EDDY CURRENT RETARDER EQUIPMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.06.2013 FR 1355859**

(43) Date de publication de la demande:
**27.04.2016 Bulletin 2016/17**

(73) Titulaire: **Telma**
**95310 Saint-Ouen L'Aumône (FR)**

(72) Inventeurs:
• **LOUNIS, Rafik**
**F-95300 Pontoise (FR)**
• **MARTIN, Mickael**
**F-93100 Montreuil (FR)**
• **QUENNET, Nicolas**
**F-95240 Cormeilles en Parisis (FR)**

(74) Mandataire: **Plasseraud IP**
**66, rue de la Chaussée d'Antin**
**75440 Paris Cedex 09 (FR)**

(56) Documents cités:
EP-A1- 0 466 941     EP-A1- 0 603 038
EP-A1- 0 660 502     CN-A- 102 540 960
JP-A- 2008 054 451

EP 3 010 747 B1

**Description**

L'invention a trait au domaine des ralentisseurs électromagnétiques pour véhicules, et plus particulièrement aux dispositifs pour mesurer le couple de freinage engendré par un tel ralentisseur.

Les ralentisseurs électromagnétiques sont des dispositifs permettant de compléter les systèmes de freinage des véhicules de toute catégorie, et notamment des véhicules terrestres à moteur tels que des trains, des poids lourds ou encore des utilitaires, pour lesquels ils sont particulièrement avantageux.

En effet, lors du freinage dit de service de véhicules de charge importante, du fait de leur grande inertie, l'énergie à dissiper pour ralentir voire pour obtenir l'arrêt du véhicule avec un système de freinage classique est tellement importante que les éléments du système de freinage, et notamment les plaquettes, subissent un échauffement entrainant une usure prématurée.

Des ralentisseurs magnétiques ont alors été mis au point pour obtenir un freinage d'endurance, c'est-à-dire de ralentir le véhicule en dissipant une part importante de l'énergie de freinage, soulageant ainsi le système de freinage classique.

Un ralentisseur électromagnétique permet de dissiper l'énergie par la génération de courants de Foucault. A cet effet, le ralentisseur comprend en général un stator, fixé par exemple au bâti du véhicule, et un rotor, monté par exemple sur un arbre de transmission qui l'entraine en rotation. Le stator et le rotor sont montés coaxiaux, en vis-à-vis l'un de l'autre, un espace appelé entrefer étant mis en place entre eux, l'un ayant un rôle d'inducteur d'un champ magnétique, l'autre ayant un rôle d'induit. Le stator peut être associé à un ou à plusieurs rotors, par exemple placés de part et d'autre du stator selon leur direction axiale.

En général, le stator joue le rôle de l'inducteur et comprend typiquement un électroaimant qui, lorsqu'il est parcouru par un courant électrique, génère un champ magnétique. L'électroaimant est typiquement obtenu en plaçant des bobines par paires, perpendiculairement à l'axe de l'arbre de transmission. Le rotor comprend un élément conducteur, appelé induit, qui, lorsqu'il est soumis au champ magnétique généré par le stator et entrainé en rotation par l'arbre de transmission, est parcouru par des courants de Foucault. Des forces, appelées forces de Laplace, apparaissent alors et s'opposent à la rotation du rotor. Le couple de freinage ainsi produit et appliqué sur l'arbre de transmission permet de ralentir le véhicule. L'énergie générée par les forces de Laplace est dissipée sous forme de chaleur.

L'obtention d'informations sur le couple de freinage réel revêt un intérêt particulier, car elle participe à la mise en place d'une gestion efficace des différentes ressources de freinage du véhicule. Par exemple, elles permettent de déterminer les performances du ralentisseur, et en déduire d'éventuelles défaillances. Des mesures de maintenance peuvent alors être entreprises avant que des dégâts irrémédiables ne soient causés. Des informations sur le couple de freinage réel permettent également de connaître l'écart entre un couple théorique, correspondant au couple de freinage attendu en fonction d'une consigne, et le couple réel, pour éventuellement corriger la tension d'alimentation des bobines en fonction de l'écart.

La température de l'induit a un impact notable sur le couple de freinage. En effet, à courant d'excitation des bobines égal, plus la température de l'induit est élevée, plus la valeur du couple de freinage est faible. La détermination de la température de l'induit permet donc d'obtenir des informations sur les performances de freinage du ralentisseur. Toutefois, l'induit est en général porté par le rotor, de sorte qu'un capteur de température ne peut pas être en contact direct avec l'induit, sauf à mettre en place un montage compliqué et donc coûteux.

Le document EP 0 603 038 propose une méthode pour obtenir indirectement la température de l'induit à un instant donné par un calcul par approche successive à partir d'une température initiale de l'induit. Le calcul prend en compte différents facteurs, déterminés par des essais pour chaque ralentisseur, la vitesse de rotation du rotor et une consigne d'alimentation des bobines. Lorsque la température ainsi calculée du rotor dépasse une valeur maximale prédéterminée, la consigne d'alimentation des bobines est réglée en conséquence.

Toutefois, cette méthode ne permet pas d'obtenir une valeur du couple de freinage du ralentisseur.

Le document EP 0 660 502 propose alors de calculer le couple de ralentissement, à un instant donné, en fonction notamment de la vitesse de rotation du rotor et de la température du rotor calculée par l'approche successive du document EP 0 603 038, et de la consigne.

Le calcul de couple de ralentissement est dans le cas du document EP 0 660 502 réalisé pour un ralentisseur à cinq niveaux de performances : le premier niveau, ou niveau zéro, étant lorsque le ralentisseur ne fonctionne pas, c'est-à-dire qu'aucune des bobines n'est alimentée, et le dernier niveau, ou niveau quatre, étant lorsque l'ensemble des bobines sont alimentées, pour un couple de freinage maximal. Un dispositif de commande pilote l'alimentation de quatre couples de bobines, ou quatre ensembles inducteurs, par l'intermédiaire de quatre relais électromagnétiques, appelés contacteurs. Suivant la demande de couple de freinage, par exemple calculée par l'électronique de bord du véhicule en fonction de la position d'un organe de commande manuelle à cinq positions, le dispositif de commande va calculer la position et / ou le nombre de contacteurs à activer pour satisfaire la demande. En d'autres termes, la consigne ne peut prendre que cinq valeurs, en fonction du nombre de bobines alimentées.

Le passage à une commande linéaire du ralentisseur a révélé que, lorsque le couple est calculé selon la méthode de l'état de la technique, l'écart avec le couple réel est trop important pour être acceptable. Les erreurs entre le couple calculé et le couple réel dans le calcul du couple vont s'accumuler, et pour de longues utilisations du véhicule, la qualité de freinage s'en trouve dégradée, le ralentisseur ne pouvant plus offrir un freinage optimal.

Le document JP 2008 054451 divulgue un dispositif d'actionnement de la force de freinage estimée et un procédé d'estimation de la force de freinage pour un décélérateur à courants de Foucault. Le document CN 102540960 divulgue un procédé de commande floue pour un ralentisseur à courants de Foucault à l'aide d'un contrôleur logique programmable.

Il existe donc un besoin pour un nouvel équipement de ralentisseur à courants de Foucault, dans lequel la commande est linéaire et permettant d'obtenir un couple calculé avec une précision accrue.

A cet effet, l'invention propose, selon un premier aspect, un équipement de ralentisseur à courants de Foucault tel que mentionné dans la revendication 1.

L'équipement peut ainsi calculer avec une précision accrue le couple de freinage.

Les moyens de commande peuvent comprendre un organe de commande manuel ou à pieds pouvant prendre une infinité de positions entre deux positions extrêmes.

En outre, par exemple, les moyens de commande comprennent un organe de commande électronique.

Selon un exemple, l'induit est porté par l'ensemble rotorique et les enroulements inducteurs sont portés par l'ensemble statorique.

Plus précisément, à cet effet, l'unité de calcul de température de l'induit peut être agencée pour calculer la température de l'induit selon la formule suivante :

$$T_R(t) = T_R(t-1) + a \times K_p \times \left[ b \times \Omega + c \times T_R(t-1) + d \times \Omega \times T_R(t-1) + e \times T_R(t-1)^2 \right]$$

dans laquelle :

$T_R(t)$ est la température de l'induit à l'instant t donné,
$T_R(t-1)$ est la température de l'induit à l'instant t-1 précédent,
$\Omega$ est la vitesse de rotation de l'ensemble rotorique à l'instant donnée ou à l'instant précédent,

$$b = b_1 + \frac{16 \times b_2 \times \beta}{4 + \dfrac{b_{var}}{16 \times \beta - 0.01}},$$

$$c = c_1 + 4 \times c_2 \times \beta,$$

$$d = d_1 + 4 \times d_2 \times \beta,$$

$$e = e_1 + 4 \times e_2 \times \beta,$$

$$K_P = 1 + (K_{P0} - 1) \times \frac{\Omega}{3000},$$

$a$, $b_1$, $b_2$, $b_{var}$, $c_1$, $c_2$, $d_1$, $d_2$, $e_1$, $e_2$ et $K_{P0}$ sont des coefficients constants,
$\beta$ désigne la consigne d'alimentation linéaire, exprimée en pourcents, appliquée aux moyens d'excitation.

De plus, l'unité de calcul du facteur de réduction peut être agencée pour calculer le facteur de réduction à un instant donné selon la formule suivante :

$$R = j \times \ln(\Omega) + k$$

dans laquelle :

$j = j_1 \times T_R(t)^4 + j_2 \times T_R(t)^3 + j_3 \times T_R(t)^2 + j_4 \times T_R(t) + j_5,$
$k = k_1 \times T_R(t)^4 + k_2 \times T_R(t)^3 + k_3 \times T_R(t)^2 + k_4 \times T_R(t) + k_5,$
$T_R(t)$ est la température de l'induit calculée à l'instant donné t,
$\Omega$ est la vitesse de rotation de l'ensemble rotorique à l'instant donné t ou à l'instant précédent t-1,
$j_1$ à $j_5$ et $k_1$ à $k_5$ sont des coefficients constants.

Enfin, l'unité de calcul du couple à chaud peut alors être agencée pour calculer le couple à chaud à un instant donné selon la formule suivante :

$$C_{hot} = C_{cold} \times R$$

Par exemple, les moyens d'excitation comprennent un variateur de puissance relié d'une part à la source électrique et d'autre part au circuit inducteur.

Selon un deuxième aspect, l'invention propose une méthode pour le calcul, à un instant t donné, d'un couple de freinage réel mise en oeuvre par un équipement de ralentisseur à courants de Foucault apte à être embarqué dans un véhicule tel que présente ci-dessus. La méthode comprend les étapes énoncé dans la revendication 9.

D'autres avantages relatifs à l'invention apparaîtront à la lumière de la description accompagnée des figures dans lesquelles :

- la figure 1 est vue en coupe partielle, en perspective, d'un ensemble rotorique et d'un ensemble statorique ;

- la figure 2 est une représentation schématique d'un équipement de ralentisseur comprenant l'ensemble rotorique et l'ensemble statorique de la figure 1 et des moyens de traitement pour calculer un couple de ralentissement ;

- la figure 3 est un schéma illustrant l'évolution du couple mesuré, du couple obtenu par l'ancienne approche selon le document EP 0 660 502 et le couple obtenu par selon la nouvelle approche exposée ici en fonction du temps, ainsi que la vitesse de rotation du rotor en fonction du temps.

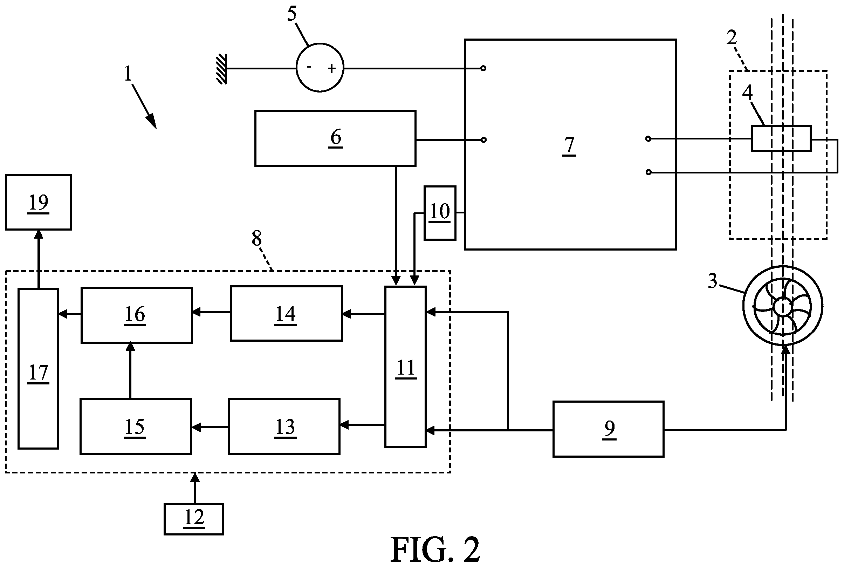

Sur la figure 2, il est représenté de manière schématique un équipement **1** de ralentisseur à courants de Foucault, apte à être embarqué dans un véhicule, par exemple de type automobile. L'équipement 1 comprend un ensemble **2** statorique, comprenant au moins un stator, et un ensemble **3** rotorique, comprenant au moins un rotor. Dans la suite, dans un souci de simplification, on n'emploiera que les termes stator et rotor en référence respectivement à l'ensemble statorique et à l'ensemble rotorique.

L'un desdits stator 2 et rotor 3 comporte des enroulements inducteurs, tels que des bobines, et forme un circuit **4** inducteur, tandis que l'autre desdits stator 2 et rotor 3 comporte un induit, en regard des enroulements inducteurs.

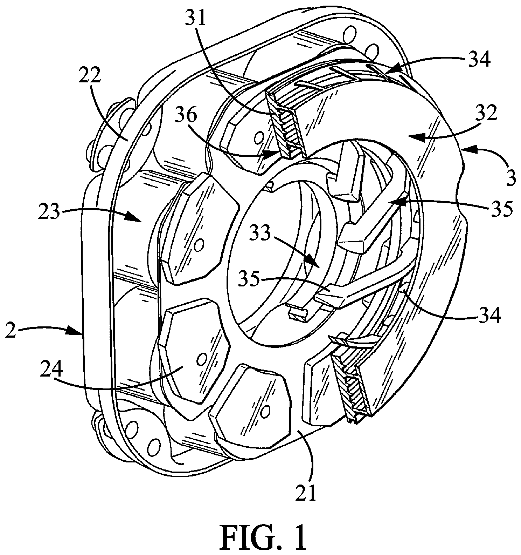

Dans ce qui suit, le circuit 4 inducteur est porté par le stator 2, et l'induit par le rotor 3, comme représenté sur la figure 1.

Le stator 2 est formé par exemple de deux plaques **21, 22** rigides, entre lesquelles des ensembles **23** de pôles sont répartis angulairement, autour d'un axe central. Chaque ensemble **23** de pôle comprend un pôle central entouré d'un fil conducteur, pour former un enroulement inducteur, ou bobine, d'axe parallèle à l'axe central. Chaque ensemble **23** de pôle présente une face d'extrémité radiale munie d'une plaque appelée épanouissement **24** polaire.

Le rotor 3 se présente par exemple sous la forme d'une pièce monobloc, en matériau ferromagnétique, obtenue par moulage. Le rotor 3 comprend un induit **31** sous la forme d'un disque annulaire, une joue **32,** également sous la forme d'un disque annulaire, de dimensions sensiblement similaires à celles de l'induit 31, et une couronne **33** de montage. Des ailettes **34** sont réparties entre la joue 32 et l'induit 31 pour dissiper la chaleur par conduction de l'induit 31 vers la joue 32 et par ventilation. Des bras **35** relient l'induit 31 à la couronne 33 de montage.

Le rotor 3 et le stator 2 sont placés en vis-à-vis, l'épanouissement 24 polaires du stator 2 faisant face à l'induit 31 du rotor 3. Un entrefer **36** est formé entre le stator 2 et le rotor 3. Le rotor 3 est par exemple rendu solidaire en rotation à un arbre de transmission entre le moteur et des organes de déplacement, par exemple des roues du véhicules, en fixant la couronne 33 de montage sur l'arbre, tandis que le stator 2 est rendu solidaire au châssis du véhicule.

En pratique, l'ensemble rotorique 3 comporte deux rotors, placés de part et d'autre du stator 2 selon l'axe de rotation. Dans la suite de la description, un seul rotor 3 est mentionné, étant entendu que tout ce qui suit s'applique au cas comprenant plus d'un rotor.

Le circuit 4 inducteur est alimenté en courant continu par une source **5** électrique du véhicule. L'équipement 1 comprend alors des moyens **6** de commande, pour établir une consigne linéaire d'alimentation, qui sont reliés à des moyens **7** d'excitation, pour exciter le circuit 4 inducteur en fonction de la consigne.

La consigne est dite linéaire, c'est-à-dire qu'elle peut prendre une infinité de valeur entre deux valeurs extrêmes. Par exemple, elle est exprimée en pourcent (%), et est notée β dans ce qui suit. La consigne β peut alors prendre une infinité de valeurs entre 0%, c'est-à-dire lorsque l'équipement 1 n'est pas mis en œuvre, et 100%, c'est-à-dire lorsque le couple de ralentissement demandé est maximal.

Les moyens 6 de commande sont par exemple un organe de commande extérieur, manuel ou à pieds, accessible par le conducteur du véhicule depuis le poste de pilotage, de sorte que le conducteur règle lui-même la consigne β en fonction de ce qu'il évalue être ses besoins. Les moyens 6 de commande peuvent également comprendre un organe de commande automatique, intégré à l'électronique de bord du véhicule, pour calculer automatiquement la consigne β. En variante, la consigne β est établie selon une combinaison de la commande réglée par le conducteur et de la commande calculée automatiquement. Par exemple, les moyens 6 de commande peuvent être intégrés avec la pédale de freinage, de sorte que plus la pression exercée au pied par le conducteur est grande, plus le couple de ralentissement demandé est élevé. Puis, au-delà d'un couple de ralentissement demandé, dépassant les capacités de l'équipement 1 de ralentisseur, d'autres ressources de ralentissement et de freinage du véhicule peuvent être mises en œuvre.

Les moyens 7 d'excitation permettent d'alimenter le circuit 4 inducteur en fonction de la consigne β, et comprennent par exemple un variateur de puissance, relié d'une part à la source 5 électrique et d'autre part au circuit 4 inducteur, ainsi qu'aux moyens 6 de commande pour tenir compte de la consigne β.

Lorsque la consigne β est établie en fonction de la commande, le circuit 4 inducteur est alimenté en courant. Un champ magnétique proportionnel à l'intensité du courant traversant le circuit 4 inducteur est alors généré. Le rotor 3, entrainé en rotation par l'arbre de transmission sur lequel il est monté, baigne dans le champ magnétique ainsi créé, et se trouve parcouru par des courants de Foucault. Des forces dites de Laplace apparaissent, s'opposant à leur cause, à savoir la rotation de l'arbre. Un couple de ralentissement apparaît alors.

Afin d'aider à la gestion des ressources du véhicule, notamment des autres ressources de freinage, et éventuellement afin de régler la consigne β, l'équipement 1 comprend des moyens 8 de traitement pour estimer le couple de ralentissement fourni par l'équipement 1.

A cet effet l'équipement 1 comporte en outre un capteur 9 de vitesse pour fournir des informations relatives à la vitesse Ω de la rotation du rotor 3. Il peut s'agir d'un capteur 9 déjà présent sur le véhicule, ou propre à l'équipement 1 de ralentisseur à courants de Foucault. L'équipement 1 comporte également un capteur 10 du courant pour mesurer l'intensité du courant $I_{mesuré}$ alimentant le circuit 4 inducteur. Par exemple, le capteur 10 de courant est relié au variateur 7 de puissance.

Les moyens 8 de traitement comprennent une interface 11 d'entrée, reliée au capteur 9 de vitesse, au capteur 10 de courant, et aux moyens 6 de commande, afin de collecter et stocker les informations relatives à la vitesse Ω de rotation du rotor 3, à la valeur de la consigne β linéaire, et à la valeur de l'intensité du courant $I_{mesuré}$ alimentant le circuit 4 inducteur.

A partir de ces trois informations, les moyens 8 de traitement permettent d'estimer la valeur du couple de ralentissement.

En effet, comme présenté en introduction, la température de l'induit 3 influe sur le couple de ralentissement.

De plus, le couple de ralentissement dépend du courant d'alimentation du circuit 4 inducteur : le couple de ralentissement augmente avec le courant d'alimentation. Cependant, il a été remarqué que la relation entre le couple de ralentissement et le courant d'alimentation n'est pas linéaire. Notamment, lorsque le courant d'alimentation est élevé, proche de sa valeur maximale, on observe un phénomène de saturation. En outre, pour un courant d'alimentation faible, par exemple inférieur à 15% de sa valeur maximale, le rendement, c'est-à-dire le couple de ralentissement, est très faible. En outre, le couple de ralentissement dépend de la vitesse de rotation du rotor 3. Plus précisément, la relation entre le couple de ralentissement et le courant d'alimentation est modifiée avec la vitesse de rotation du rotor 3.

Ainsi, pour une commande donnée, et une consigne β établie en conséquence de cette seule commande, le couple de ralentissement réel fourni par l'équipement 1 peut ne pas être égal au couple attendu.

La consigne β étant linéaire, l'accumulation d'erreurs engendre rapidement des écarts importants entre le couple commandé et le couple réel. Il s'ensuit des erreurs de calcul par exemple pour les autres équipements du véhicule. Ces erreurs peuvent également aboutir à une mauvaise conduite du véhicule par le conducteur, à cause des informations erronées à sa disposition.

Ainsi, la caractérisation de l'influence de ces trois informations, à savoir la vitesse Ω de rotation du rotor 3, la valeur de la consigne β linéaire, et la valeur de l'intensité du courant $I_{mesuré}$ alimentant le circuit 4 inducteur, sur le couple de ralentissement permet de le calculer.

Le calcul du couple de ralentissement est effectué à un instant t donné, et plus précisément il est effectué régulièrement, selon une période déterminée, par exemple par une horloge **12** reliée aux moyens 8 de traitement, qui est suffisamment faible pour que le temps entre deux calculs successifs du couple soit invisible pour les instruments du véhicule qui utilisent cette information. Ainsi, virtuellement, le calcul du couple peut être continu.

Les moyens 8 de traitement comprennent alors une unité 13 de calcul de la température du rotor 3, et plus précisément de la température de l'induit 31. Dans ce qui suit, température du rotor 3 et température de l'induit 31 sont confondues. L'unité 13 de calcul de la température $T_R$ du rotor 3 est reliée à l'interface 11 d'entrée, qui lui fournit des informations relatives à la vitesse $\Omega$ de rotation du rotor 3 ainsi qu'à la consigne $\beta$, pour estimer à un instant t donné la température $T_R(t)$ du rotor 3.

Il a été déterminé que la température $T_R(t)$ du rotor 3 pouvait être déterminée par une approche successive, selon la formule (1) suivante :

$$T_R(t) = T_R(t-1) + a \times K_p \times \left[ b \times \Omega + c \times T_R(t-1) + d \times \Omega \times T_R(t-1) + e \times T_R(t-1)^2 \right] \quad (1)$$

dans laquelle :

- $T_R(t)$ est la température du rotor 3, ou de l'induit, à l'instant t donné,
- $T_R(t-1)$ est la température du rotor 3, ou de l'induit, calculé à l'instant t-1 précédent selon la période de l'horloge 12,
- $\Omega$ est la vitesse de rotation de l'ensemble rotorique à l'instant t donné ou à l'instant précédent,

$$b = b_1 + \frac{16 \times b_2 \times \beta}{4 + \dfrac{b_{var}}{16 \times \beta - 0.01}},$$

$$c = c_1 + 4 \times c_2 \times \beta,$$

$$d = d_1 + 4 \times d_2 \times \beta,$$

$$e = e_1 + 4 \times e_2 \times \beta,$$

$$K_P = 1 + (K_{P0} - 1) \times \frac{\Omega}{3000},$$

- $a$, $b_1$, $b_2$, $b_{var}$, $c_1$, $c_2$, $d_1$, $d_2$, $e_1$, $e_2$ et $K_{P0}$ sont des coefficients constants,
- $\beta$ désigne, comme précédemment, la consigne d'alimentation linéaire, exprimée en pourcents, appliquée aux moyens d'excitation à l'instant t donné ou à l'instant t-1 précédent selon le cycle de l'horloge 12.

Les coefficients sont déterminés en fonction du type d'équipement 1 de ralentisseur mis en oeuvre, et notamment en fonction des caractéristiques du stator 2 et du rotor 3. Ils sont par exemple déterminés suite à des essais effectués sur chaque type d'équipement, et enregistrés dans une mémoire des moyens 8 de traitement pour être disponibles pour l'unité 13 de calcul de la température $T_R$ du rotor 3 à l'instant t donné.

Les moyens 8 de traitement comprennent de plus une unité 14 de calcul d'un couple **C_cold**, dit à froid, rendant compte à un instant t donné du couple maximal de ralentissement que l'équipement 1 pourrait fournir en absence de l'influence de la température de l'induit. L'unité 14 de calcul du couple $C_{cold}$ à froid est reliée à l'interface 11 d'entrée, qui lui fournit des informations sur la vitesse $\Omega$ de rotation du rotor 3 ainsi que sur la valeur de l'intensité du courant $I_{mesuré}$ alimentant le circuit 4 inducteur. Ainsi, selon un exemple de calcul, il a été déterminé que le couple $C_{cold}$ à froid peut être calculé selon la formule (2) suivante :

$$C_{cold} = \frac{\alpha}{\left[ \left(\dfrac{\Omega}{\Omega_0}\right)^\gamma + \left(\dfrac{\Omega_0}{\Omega}\right)^\delta \right]} \quad (2)$$

dans laquelle :

- $\alpha = f_1 \times I_{pc} + f_2$,
- $\Omega_0 = g_1 \times I_{pc} + g_2$,
- $\gamma = h_1 \times I_{pc}^3 + h_2 \times I_{pc}^2 + h_3 \times I_{pc} + h_4$,
- $\Omega$ est la vitesse de rotation de l'ensemble 3 rotorique à l'instant donné t ou à l'instant précédent t-1,
- $f_1$, $f_2$, $g_1$, $g_2$, $h_1$, $h_2$, $h_3$ sont des coefficients constants,
- $I_{pc}$ est une valeur de l'intensité maximale du courant disponible dans le circuit inducteur en fonction de la consigne $\beta$ d'alimentation linéaire.

Les coefficients constants sont ici déterminés comme précédemment, par exemple par essais, et stockés dans une mémoire pour être disponible à l'unité 14 de calcul du couple $C_{cold}$ à froid à l'instant t donné.

La valeur $I_{pc}$ de l'intensité maximale du courant disponible dans le circuit 4 inducteur est basée sur la mesure par le capteur 10 de courant de l'intensité fournit par les moyens 7 d'excitation au circuit 4 inducteur, pendant l'activation de l'équipement 1 de ralentisseur, en fonction de la consigne $\beta$ et est exprimée en pourcent (%).

Par exemple, lorsque l'équipement 1 de ralentisseur n'est pas activé, la consigne $\beta$ est égale à 0%. Dans ce cas, la valeur $I_{pc}$ de l'intensité maximale du courant disponible est mise comme égale à 85%.

Lorsque l'équipement 1 est activé, la consigne $\beta$ est supérieure à 0%, et la valeur $I_{pc}$ de l'intensité maximale du courant disponible est déterminée en fonction de la valeur de l'intensité $I_{mesuré}$ mesurée par le capteur 10 de courant, d'une valeur $I_{réf}$ de référence, qui est l'intensité du courant maximal pouvant alimenter le circuit 4 inducteur. Par exemple, la valeur $I_{pc}$ de l'intensité maximale du courant disponible dans le circuit 4 inducteur est calculée selon la formule

$$I_{dispo} = \frac{I_{mesuré}}{I_{Re\,f}} \times \frac{100}{\beta}$$

suivante : $I_{pc} = Min_{\lfloor}100 ; I_{dispo\rfloor}$ pour $\beta \neq 0$ avec .

Le couple $C_{cold}$ à froid ne permet pas de tenir compte de l'influence de la température sur le couple de ralentissement réel. Ainsi, en d'autres termes, le couple $C_{cold}$ à froid permet de caractériser le fonctionnement de l'équipement 1 de ralentisseur sans l'influence de la température. Les moyens 8 de traitement comprennent une unité **15** de calcul d'un facteur **R** de réduction, représentant quantitativement l'influence de la température du rotor 3. L'unité 15 de calcul du facteur R de réduction est reliée à l'unité 13 de calcul de la température $T_R$ du rotor, ainsi qu'à l'interface 11 d'entrée qui lui fournit une information sur la vitesse $\Omega$ de rotation du rotor 3. Selon un exemple de calcul, il a été déterminé que le facteur R de réduction peut être calculé d'après la formule (3) suivante :

$$R = j \times \ln(\Omega) + k \qquad (3)$$

dans laquelle :

- $j = j_1 \times T_R(t)^4 + j_2 \times T_R(t)^3 + j_3 \times T_R(t)^2 + j_4 \times T_R(t) + j_5$,
- $k = k_1 \times T_R(t)^4 + k_2 \times T_R(t)^3 + k_3 \times T_R(t)^2 + k_4 \times T_R(t) + k_5$,
- $T_R(t)$ est la température de l'induit calculée à l'instant donné t par l'unité 13 de calcul de la température de l'induit 31,
- $\Omega$ est comme précédemment la vitesse de rotation de l'ensemble 3 rotorique à l'instant donné t ou à l'instant précédent t-1,
- $j_1$ à $j_5$ et $k_1$ à $k_5$ sont des coefficients constants.

Les coefficients constants sont ici encore déterminés, comme précédemment, par des essais dépendants du type d'équipement 1 de ralentisseur et stockés dans une mémoire pour être disponible à l'unité 15 de calcul du facteur R de réduction à l'instant t donné.

Le facteur R de réduction caractérise ainsi l'influence de la température sur l'équipement 1 de ralentisseur.

Enfin, les moyens 8 de traitement comprennent une unité **16** de calcul du couple $C_{hot}$ dit à chaud, en fonction du couple $C_{cold}$ à froid et du facteur R de réduction. Par exemple, le couple $C_{hot}$ à chaud peut être calculé selon la formule suivante :

$$C_{hot} = C_{cold} \times R \qquad (4)$$

Le couple $C_{hot}$ à chaud fournit une estimation fiable du couple de ralentissement réel fourni par l'équipement 1 de ralentisseur à l'instant t donné, en fonction de la consigne $\beta$ linéaire.

La valeur du couple $C_{hot}$ à chaud peut être fourni à une interface **17** de sortie des moyens 8 de traitement, laquelle interface 17 de sortie peut enregistrer les valeurs du couple $C_{hot}$ à chaud sur une durée déterminée pour une analyse ultérieure des performances de l'équipement 1 de ralentisseur. L'interface 17 de sortie peut également être reliée à un dispositif **19** de gestion du freinage du véhicule, afin solliciter d'autres ressources de freinage du véhicule en conséquence. Elle peut également être prise en compte pour établir la consigne β et corriger les écarts entre le couple commandé et le couple $C_{hot}$ à chaud.

L'équipement 1 de ralentisseur ainsi décrit permet d'obtenir une estimation fiable du couple réel de ralentissement grâce au calcul du couple $C_{hot}$ tenant compte de l'influence de la température $T_R$ de l'induit et de la consigne β linéaire. Les erreurs de calcul sont alors grandement diminuées.

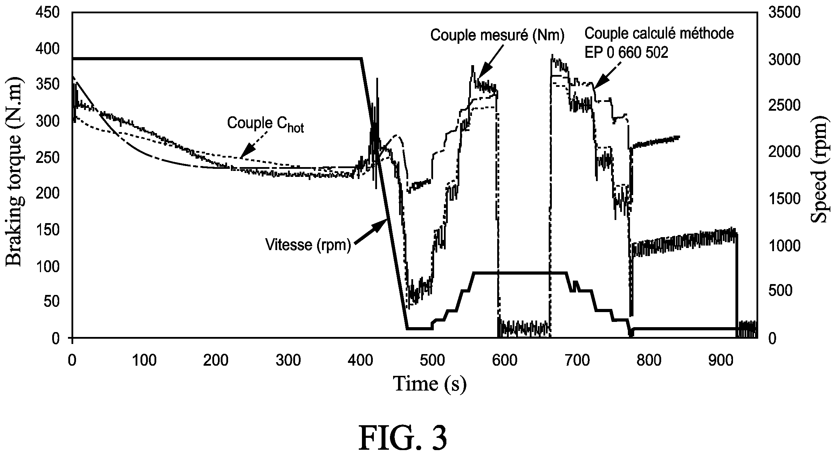

La figure 3 compare le couple de ralentissement réel, c'est-à-dire mesuré, au couple obtenu par un calcul selon l'ancienne approche de l'état de la technique, par exemple celle exposée dans le document EP 0 660 502 ainsi qu'au couple $C_{hot}$, obtenu par l'approche exposée dans la présente demande. Le nouveau modèle de calcul permettant de calculer le couple $C_{hot}$ à chaud réduit les erreurs de calcul par rapport au couple obtenu par l'ancienne approche, notamment lorsque la vitesse de rotation du rotor 3 diminue. La précision du couple de ralentissement obtenu par la nouvelle approche est ainsi clairement augmentée par rapport à l'ancienne approche.

## Revendications

1. Equipement (**1**) de ralentisseur à courants de Foucault apte à être embarqué dans un véhicule, comprenant :

 - un ensemble (**2**) statorique,
 - un ensemble (**3**) rotorique, adapté au montage sur un arbre de transmission du véhicule,
 l'un desdits ensemble (**2**) statorique et ensemble (**3**) rotorique comprenant des enroulements (**23**) inducteurs formant un circuit (**4**) inducteur et l'autre desdits ensemble (**2**) statorique et ensemble (**3**) rotorique comportant un induit (**31**) en regard des enroulements inducteurs (**23**),
 l'équipement (**1**) comprenant en outre :

 - des moyens (**6**) de commande pour établir une consigne (β) linéaire,
 - des moyens (**7**) d'excitation pour exciter le circuit (**4**) inducteur depuis une source (**5**) électrique du véhicule en fonction de la consigne (β),
 - un capteur (**9**) de vitesse pour fournir des informations relatives à la vitesse (Ω) de rotation de l'ensemble (**3**) rotorique,
 - un capteur (**10**) de l'intensité du courant alimentant le circuit (**4**) inducteur,
 - des moyens (**8**) de traitement pour estimer à un instant (**t**) donné le couple de ralentissement fourni par l'équipement (**1**),

 les moyens (**8**) de traitement comprenant une unité (**13**) de calcul de température adaptée pour évaluer, la température ($T_R$) de l'induit (**31**), en fonction notamment de la vitesse (Ω) de rotation de l'ensemble (**3**) rotorique et de la consigne (β) linéaire,
 les moyens de traitement comprennant de plus :

 - une unité (**14**) de calcul de couple pour calculer un couple ($C_{cold}$) dit à froid en fonction et de la vitesse (Ω) de rotation de l'ensemble (**3**) rotorique, caractéristique d'un fonctionnement de l'équipement sans influence de la température ;
 - une unité (**15**) de calcul d'un facteur (**R**) de réduction en fonction notamment de la vitesse (Ω) de rotation de l'ensemble (**3**) rotorique et de la température ($T_R$) de l'induit (**31**), caractéristique de l'influence de la température sur le fonctionnement de l'équipement ;
 - une unité (**16**) de calcul d'un couple ($C_{hot}$) dit à chaud en fonction notamment du produit du couple ($C_{cold}$) à froid et du facteur (**R**) de réduction, caractéristique du couple de ralentissement réel fourni par l'équipement,
 **caractérisé en ce que** l'unité (**14**) de calcul de couple ($C_{cold}$) dit à froid calcule ledit couple ($C_{cold}$) dit à froid en fonction notamment du courant ($I_{mesuré}$) dans le circuit (**4**) inducteur et

 dans lequel la température ($T_R$) de l'induit (**31**) est calculée par approche successive, la valeur de la température ($T_R$) de l'induit (**31**) à un instant donné dépendant notamment de la valeur de la température ($T_R$) de l'induit (**31**) calculée à l'instant (**t-1**) précédent, de la consigne (β) et de la vitesse (Ω) de rotation de l'ensemble (**2**) statorique, à l'instant (**t**) donné ou à l'instant (**t-1**) précédent dans lequel l'unité (**14**) de calcul du couple à froid est agencée pour calculer le couple à froid à un instant (**t**) donné selon la formule suivante :

$$C_{cold} = \frac{\alpha}{\left[ (\frac{\Omega}{\Omega_0})^{\gamma} + (\frac{\Omega_0}{\Omega})^{\delta} \right]}$$

dans laquelle :

$$\alpha = f_1 \times I_{pc} + f_2,$$

$$\Omega_0 = g_1 \times I_{pc} + g_2,$$

$$\gamma = h_1 \times I_{pc}^3 + h_2 \times I_{pc}^2 + h_3 \times I_{pc} + h4,$$

$\Omega$ est la vitesse de rotation de l'ensemble rotorique à l'instant donné t ou à l'instant précédent t-1,
Où
$f_1$, $f_2$, $g_1$, $g_2$, $h_1$, $h_2$, $h_3$ sont des coefficients constants,
$I_{pc}$ est une valeur de l'intensité maximale du courant disponible dans le circuit (**4**) inducteur en fonction de la consigne ($\beta$) d'alimentation linéaire.

2. Equipement (**1**) selon la revendication 1, dans lequel les moyens (**6**) de commande comprennent un organe de commande manuel ou à pieds pouvant prendre une infinité de positions entre deux positions extrêmes.

3. Equipement (**1**) selon la revendication 1 ou la revendication 2, dans lequel les moyens (**6**) de commande comprennent un organe de commande électronique.

4. Equipement (**1**) selon l'une quelconque des revendications précédentes, dans lequel l'induit (**31**) est porté par l'ensemble (**3**) rotorique et les enroulements (**23**) inducteurs sont portés par l'ensemble (**2**) statorique.

5. Equipement (**1**) selon la revendication 4, dans lequel l'unité (**13**) de calcul de température (**T$_R$**) de l'induit (**31**) est agencée pour calculer la température (**T$_R$**) de l'induit selon la formule suivante :

$$T_R(t) = T_R(t-1) + a \times K_p \times \left[ b \times \Omega + c \times T_R(t-1) + d \times \Omega \times T_R(t-1) + e \times T_R(t-1)^2 \right]$$

dans laquelle :

$T_R(t)$ est la température de l'induit à l'instant t donné,
$T_R(t-1)$ est la température de l'induit à l'instant t-1 précédent,
$\Omega$ est la vitesse de rotation de l'ensemble rotorique à l'instant donnée ou à l'instant précédent,

$$b = b_1 + \frac{16 \times b_2 \times \beta}{4 + \frac{b_{var}}{16 \times \beta - 0.01}},$$

$$c = c_1 + 4 \times c_2 \times \beta,$$

$$d = d_1 + 4 \times d_2 \times \beta,$$

$$e = e_1 + 4 \times e_2 \times \beta \,,$$

$$K_P = 1 + (K_{P0} - 1) \times \frac{\Omega}{3000} \,,$$

$a$, $b_1$, $b_2$, $b_{var}$, $c_1$, $c_2$, $d_1$, $d_2$, $e_1$, $e_2$ et $K_{P0}$ sont des coefficients constants,
$\beta$ désigne la consigne d'alimentation linéaire, exprimée en pourcents, appliquée aux moyens d'excitation.

6. Equipement (**1**) selon la revendication 4 ou la revendication 6, dans lequel l'unité (**15**) de calcul du facteur (**R**) de réduction est agencée pour calculer le facteur (**R**) de réduction à un instant (**t**) donné selon la formule suivante :

$$R = j \times \ln(\Omega) + k$$

dans laquelle :

$$j = j_1 \times T_R(t)^4 + j_2 \times T_R(t)^3 + j_3 \times T_R(t)^2 + j_4 \times T_R(t) + j_5 \,,$$

$$k = k_1 \times T_R(t)^4 + k_2 \times T_R(t)^3 + k_3 \times T_R(t)^2 + k_4 \times T_R(t) + k_5 \,,$$

$T_R(t)$ est la température de l'induit calculée à l'instant donné t,
$\Omega$ est la vitesse de rotation de l'ensemble rotorique à l'instant donné t ou à l'instant précédent t-1,
$j_1$ à $j_5$ et $k_1$ à $k_5$ sont des coefficients constants.

7. Equipement (**1**) selon la revendication 6 et la revendication 8, dans lequel l'unité (**16**) de calcul du couple (**C$_{hot}$**) à chaud est agencée pour calculer le couple (**C$_{hot}$**) à chaud à un instant (**t**) donné selon la formule suivante :

$$C_{hot} = C_{cold} \times R$$

8. Equipement (**1**) selon l'une des revendications 1 à 7, dans lequel les moyens (**7**) d'excitation comprennent un variateur de puissance relié d'une part à la source (**5**) électrique et d'autre part au circuit (**4**) inducteur.

9. Méthode pour le calcul, à un instant (**t**) donné, d'un couple de freinage réel mise en œuvre par un équipement (**1**) de ralentisseur à courants de Foucault apte à être embarqué dans un véhicule selon l'une quelconque des revendications 1 à 8, comprenant les étapes suivantes :

   - la mesure de l'intensité du courant (**I$_{mesuré}$**) dans le circuit (**4**) inducteur ;
   - la mesure de la vitesse ($\Omega$) de rotation de l'ensemble (**3**) rotorique ;
   - l'évaluation de la température de l'induit en fonction notamment de la vitesse ($\Omega$) de rotation de l'ensemble (**3**) rotorique et de la consigne ($\beta$) linéaire ;
   - le calcul d'un couple (**C$_{cold}$**) dit à froid en fonction notamment du courant (**I$_{mesuré}$**) dans le circuit (**4**) inducteur et de la vitesse ($\Omega$) de rotation de l'ensemble (**3**) rotorique, caractéristique d'un fonctionnement de l'équipement sans influence de la température ;
   - le calcul d'un facteur (**R**) de réduction en fonction notamment de la vitesse ($\Omega$) de rotation de l'ensemble (**3**) rotorique et de la température (**T$_R$**) de l'induit (**31**), caractéristique de l'influence de la température sur le fonctionnement de l'équipement ;
   - le calcul d'un couple (**C$_{hot}$**) dit à chaud en fonction notamment du produit du couple (**C$_{cold}$**) à froid et du facteur (**R**) de réduction, caractéristique du couple de freinage réel fourni par l'équipement, **caractérisé en ce qu'**il comporte en outre les étapes suivantes :

      - le calcul dudit couple (**C$_{cold}$**) dit à froid en fonction notamment du courant (**I$_{mesuré}$**) dans le circuit (**4**) inducteur et
      - le calcul par approche successive de la température (**T$_R$**) de l'induit (**31**) ; la valeur de la température (**T$_R$**)

de l'induit (**31**) à un instant donné dépendant notamment de la valeur de la température ($T_R$) de l'induit (**31**) calculée à l'instant (**t-1**) précédent, de la consigne ($\beta$) et de la vitesse ($\Omega$) de rotation de l'ensemble (**2**) statorique, à l'instant (**t**) donné ou à l'instant (**t-1**) précédent ;

- le calcul du couple à froid à un instant (**t**) donné selon la formule suivante :

$$C_{cold} = \frac{\alpha}{\left[ \left(\dfrac{\Omega}{\Omega_0}\right)^{\gamma} + \left(\dfrac{\Omega_0}{\Omega}\right)^{\delta} \right]}$$

dans laquelle :

$$\alpha = f_1 \times I_{pc} + f_2,$$

$$\Omega_0 = g_1 \times I_{pc} + g_2,$$

$$\gamma = h_1 \times I_{pc}^3 + h_2 \times I_{pc}^2 + h_3 \times I_{pc} + h4,$$

$\Omega$ est la vitesse de rotation de l'ensemble rotorique à l'instant donné t ou à l'instant précédent t-1,
Où
$f_1$, $f_2$, $g_1$, $g_2$, $h_1$, $h_2$, $h_3$ sont des coefficients constants,
$I_{pc}$ est une valeur de l'intensité maximale du courant disponible dans le circuit (**4**) inducteur en fonction de la consigne ($\beta$) d'alimentation linéaire.

## Patentansprüche

1.  Wirbelstrom-Retarder-Ausrüstung (1), welche zum Einbau in ein Fahrzeug geeignet ist, umfassend:

    - eine Statorbaugruppe (2),
    - eine Rotorbaugruppe (3), die zur Montage an einer Antriebswelle des Fahrzeugs ausgebildet ist,
    wobei die eine aus Statorbaugruppe (2) und Rotorbaugruppe (3) Feldwicklungen (23) umfasst, die eine Induktionsschaltung (4) bilden, und die andere aus Statorbaugruppe (2) und Rotorbaugruppe (3) einen den Feldwicklungen (23) zugewandten Anker (31) umfasst,
    wobei die Ausrüstung (1) ferner umfasst:

    - Steuermittel (6) zum Erstellen eines linearen Sollwerts (ß),
    - Erregermittel (7) zum Erregen der Induktionsschaltung (4) von einer elektrischen Quelle (5) des Fahrzeugs abhängig von dem Sollwert (ß),
    - einen Geschwindigkeitssensor (9) zur Bereitstellung von Informationen zur Drehgeschwindigkeit ($\Omega$) der Rotorbaugruppe (3),
    - einen Sensor (10) für die Stärke des Stroms, der die Induktionsschaltung (4) versorgt,
    - Verarbeitungsmittel (8) zum Schätzen des von der Ausrüstung (1) gelieferten Verzögerungsmoments zu einem gegebenen Zeitpunkt (t),

    wobei die Verarbeitungsmittel (8) eine Temperaturberechnungseinheit (13) umfassen, die dazu ausgebildet ist, die Temperatur ($T_R$) des Ankers (31) in Abhängigkeit insbesondere von der Drehgeschwindigkeit ($\Omega$) der Rotorbaugruppe (3) und dem linearen Sollwert (ß) zu bewerten,
    wobei die Verarbeitungsmittel ferner umfassen:

    - eine Drehmomentberechnungseinheit (14) zum Berechnen eines sogenannten kalten Drehmoments ($C_{cold}$) in Abhängigkeit von der Drehgeschwindigkeit ($\Omega$) der Rotorbaugruppe (3), die charakteristisch für einen Betrieb der Ausrüstung ohne Temperatureinfluss ist;
    - eine Einheit (15) zur Berechnung eines Reduktionsfaktors (R) in Abhängigkeit insbesondere von der

Drehgeschwindigkeit ($\Omega$) der Rotorbaugruppe (3) und der Temperatur ($T_R$) des Ankers (31), die charakteristisch für den Einfluss der Temperatur auf den Betrieb der Ausrüstung ist;
- eine Einheit (16) zur Berechnung eines sogenannten warmen Drehmoments ($C_{hot}$) in Abhängigkeit insbesondere von dem Produkt des kalten Drehmoments ($C_{cold}$) und des Reduktionsfaktors (R), der charakteristisch für das von der Ausrüstung gelieferte tatsächliche Verzögerungsmoment ist, **dadurch gekennzeichnet, dass** die Einheit (14) zur Berechnung des sogenannten kalten Drehmoments ($C_{cold}$) das sogenannte kalte Drehmoment ($C_{cold}$) als Funktion insbesondere des Stroms ($I_{mesuré}$) in der Induktionsschaltung (4) berechnet, und

wobei die Temperatur ($T_R$) des Ankers (31) durch sukzessive Annäherung berechnet wird, wobei der Wert der Temperatur ($T_R$) des Ankers (31) zu einem gegebenen Zeitpunkt insbesondere abhängt von dem Wert der Temperatur ($T_R$) des Ankers (31), der zum vorhergehenden Zeitpunkt (t-1) berechnet wurde, vom Sollwert (ß) und der Drehgeschwindigkeit ($\Omega$) der Statorbaugruppe (2) zu dem gegebenen Zeitpunkt (t) oder zu dem vorhergehenden Zeitpunkt (t-1), wobei die Einheit (14) zur Berechnung des kalten Drehmoments dazu angeordnet ist, das kalte Drehmoment zu einem gegebenen Zeitpunkt (t) gemäß der folgenden Formel zu berechnen:

$$C_{cold} = \frac{\alpha}{\left[ (\frac{\Omega}{\Omega_0})^{\gamma} + (\frac{\Omega_0}{\Omega})^{\delta} \right]}$$

wobei gilt:

$$\alpha = f_1 \times I_{pc} + f_2,$$

$$\Omega_0 = g_1 \times I_{pc} + g_2,$$

$$\gamma = h_1 \times I_{pc}^3 + h_2 \times I_{pc}^2 + h_3 \times I_{pc} + h4,$$

$\Omega$ ist die Drehgeschwindigkeit der Rotorbaugruppe zum gegebenen Zeitpunkt t oder zum vorhergehenden Zeitpunkt t-1,
wobei
$f_1$, $f_2$, $g_1$, $g_2$, $h_1$, $h_2$, $h_3$ konstante Koeffizienten sind,
$I_{pc}$ ein Wert der maximalen Stromstärke ist, die in der Induktionsschaltung (4) als Funktion des linearen Versorgungssollwerts (ß) zur Verfügung steht.

2. Ausrüstung (1) nach Anspruch 1, wobei die Steuermittel (6) ein manuelles oder fußbetätigtes Steuerelement umfassen, das zwischen zwei Extrempositionen eine unendliche Anzahl von Positionen einnehmen kann.

3. Ausrüstung (1) nach Anspruch 1 oder Anspruch 2, wobei die Steuermittel (6) ein elektronisches Steuergerät umfassen.

4. Ausrüstung (1) nach einem der vorhergehenden Ansprüche, wobei der Anker (31) von der Rotorbaugruppe (3) getragen ist und die Feldwicklungen (23) von der Statorbaugruppe (2) getragen sind.

5. Ausrüstung (1) nach Anspruch 4, wobei die Einheit (13) zur Berechnung der Temperatur ($T_R$) des Ankers (31) dazu angeordnet ist, die Temperatur ($T_R$) des Ankers gemäß der folgenden Formel zu berechnen:

$$T_R(t) = T_R(t-1) + a \times K_p \times \left[ b \times \Omega + c \times T_R(t-1) + d \times \Omega \times T_R(t-1) + e \times T_R(t-1)^2 \right]$$

wobei gilt:

$T_R(t)$ ist die Temperatur des Ankers zum gegebenen Zeitpunkt t,
$T_R(t-1)$ ist die Temperatur des Ankers zum vorhergehenden Zeitpunkt t-1,
$\Omega$ ist die Drehgeschwindigkeit der Rotorbaugruppe zum gegebenen Zeitpunkt oder zum vorhergehenden Zeitpunkt,

$$b = b_1 + \frac{16 \times b_2 \times \beta}{4 + \dfrac{b_{var}}{16 \times \beta - 0.01}} ,$$

$$c = c_1 + 4 \times c_2 \times \beta ,$$

$$d = d_1 + 4 \times d_2 \times \beta ,$$

$$e = e_1 + 4 \times e_2 \times \beta ,$$

$$K_p = 1 + (K_{P0} - 1) \times \frac{\Omega}{3000} ,$$

$a_1$, $b_1$, $b_2$, $b_{var}$, $c_1$, $c_2$, $d_1$, $d_2$, $e_1$, $e_2$ und $K_{P0}$ sind konstante Koeffizienten,
ß bezeichnet den in Prozent ausgedrückten linearen Versorgungssollwert, der auf die Erregermittel angewendet wird.

6. Ausrüstung (1) nach Anspruch 4 oder Anspruch 6, wobei die Einheit (15) zur Berechnung des Reduktionsfaktors (R) dazu angeordnet ist, den Reduktionsfaktor (R) zu einem gegebenen Zeitpunkt (t) gemäß der folgenden Formel zu berechnen:

$$R = j \times \ln(\Omega) + k$$

wobei gilt:

$$j = j_1 \times T_R(t)^4 + j_2 \times T_R(t)^3 + j_3 \times T_R(t)^2 + j_4 \times T_R(t) + j_5 ,$$

$$k = k_1 \times T_R(t)^4 + k_2 \times T_R(t)^3 + k_3 \times T_R(t)^2 + k_4 \times T_R(t) + k_5 ,$$

$T_R(t)$ ist die berechnete Ankertemperatur zum gegebenen Zeitpunkt t,
$\Omega$ ist die Drehgeschwindigkeit der Rotorbaugruppe zum gegebenen Zeitpunkt t oder zum vorhergehenden Zeitpunkt t-1,
$j_1$ bis $j_5$ und $k_1$ bis $k_5$ sind konstante Koeffizienten.

7. Ausrüstung (1) nach Anspruch 6 und Anspruch 8, wobei die Einheit (16) zur Berechnung des warmen Drehmoments ($C_{hot}$) derart angeordnet ist, dass sie das warme Drehmoment ($C_{hot}$) zu einem gegebenen Zeitpunkt (t) gemäß der folgenden Formel berechnet:

$$C_{hot} = C_{cold} \times R$$

8. Ausrüstung (1) nach einem der Ansprüche 1 bis 7, wobei die Erregermittel (7) einen Leistungssteller umfassen, der einerseits mit der elektrischen Quelle (5) und andererseits mit der Induktionsschaltung (4) verbunden ist.

9. Verfahren zur Berechnung eines tatsächlichen Bremsmoments zu einem gegebenen Zeitpunkt (t), welche von einer Wirbelstrom-Retarder-Ausrüstung (1) durchgeführt wird, die in ein Fahrzeug nach einem der Ansprüche 1 bis 8 eingebaut werden kann, umfassend die folgenden Schritte:

- Messung der Stromstärke ($I_{mesuré}$) in der Induktionsschaltung (4);
- Messung der Drehgeschwindigkeit ($\Omega$) der Rotorbaugruppe (3);
- Bewertung der Temperatur des Ankers in Abhängigkeit insbesondere von der Drehgeschwindigkeit ($\Omega$) der Rotorbaugruppe (3) und dem linearen Sollwert (ß);
- Berechnung eines sogenannten kalten Drehmoments ($C_{cold}$) in Abhängigkeit insbesondere vom Strom ($I_{mesuré}$) in der Induktionsschaltung (4) und von der Drehgeschwindigkeit ($\Omega$) der Rotorbaugruppe (3), die für einen Betrieb der Ausrüstung ohne Temperatureinfluss charakteristisch ist;
- Berechnung eines Reduktionsfaktors (R) in Abhängigkeit insbesondere von der Drehgeschwindigkeit ($\Omega$) der Rotorbaugruppe (3) und der Temperatur ($T_R$) des Ankers (31), charakteristisch für den Einfluss der Temperatur auf den Betrieb der Ausrüstung;
- Berechnung eines sogenannten warmen Drehmoments ($C_{hot}$) in Abhängigkeit insbesondere vom Produkt aus dem kalten Drehmoment ($C_{cold}$) und dem Reduktionsfaktor (R), der für das von der Ausrüstung gelieferte tatsächliche Bremsmoment charakteristisch ist, **dadurch gekennzeichnet, dass** sie außerdem die folgenden Schritte umfasst:

- Berechnung des sogenannten kalten Drehmoments ($C_{cold}$) in Abhängigkeit insbesondere vom Strom ($I_{mesuré}$) in der Induktionsschaltung (4) und
- Berechnung der Temperatur ($T_R$) des Ankers (31) durch sukzessive Annäherung; wobei der Wert der Temperatur ($T_R$) des Ankers (31) zu einem gegebenen Zeitpunkt insbesondere von dem Wert der Temperatur ($T_R$) des Ankers (31), der zum vorhergehenden Zeitpunkt (t-1) berechnet wurde, dem Sollwert (ß) und der Drehgeschwindigkeit ($\Omega$) der Statorbaugruppe (2) zum gegebenen Zeitpunkt (t) oder zum vorhergehenden Zeitpunkt (t-1) abhängt;
- Berechnung des kalten Drehmoments zu einem gegebenen Zeitpunkt (t) gemäß der folgenden Formel:

$$C_{cold} = \frac{\alpha}{\left[ \left(\frac{\Omega}{\Omega_0}\right)^{\gamma} + \left(\frac{\Omega_0}{\Omega}\right)^{\delta} \right]}$$

wobei gilt:

$$\alpha = f_1 \times I_{pc} + f_2,$$

$$\Omega_0 = g_1 \times I_{pc} + g_2,$$

$$\gamma = h_1 \times I_{pc}^3 + h_2 \times I_{pc}^2 + h_3 \times I_{pc} + h4,$$

$\Omega$ ist die Drehgeschwindigkeit der Rotorbaugruppe zum gegebenen Zeitpunkt t oder zum vorhergehenden Zeitpunkt t-1,
wobei
$f_1$, $f_2$, $g_1$, $g_2$, $h_1$, $h_2$, $h_3$ konstante Koeffizienten sind,
$I_{pc}$ ein Wert der maximalen Stromstärke ist, die in der Induktionsschaltung (4) in Abhängigkeit vom Sollwert (ß) der linearen Stromversorgung zur Verfügung steht.

**Claims**

1. Eddy current retarder equipment (**1**) capable of being carried on board a vehicle, comprising:

- a stator assembly (**2**),
- a rotor assembly (**3**) capable of being mounted on a transmission shaft of the vehicle,
one of said stator assembly (**2**) and rotor assembly (**3**) comprising inductor windings (**23**) forming an inductor circuit (**4**) and the other of said stator assembly (**2**) and rotor assembly (**3**) comprising an armature (**31**) facing the inductor windings (**23**),
the equipment (**1**) further comprising:

- control means (**6**) for establishing a linear setting (β),
- excitation means (**7**) for exciting the inductor circuit (**4**) from an electric power source (**5**) of the vehicle as a function of the setting (β),
- a speed sensor (**9**) for providing information relating to the rotational speed (Ω) of the rotor assembly (**3**),
- a sensor (**10**) of the strength of current supplying the inductor circuit (**4**),
- processing means (**8**) for estimating at a given time (**t**) the retarding torque provided by the equipment (**1**),

the processing means (**8**) comprising a unit (**13**) for calculating temperature capable of evaluating the temperature ($T_R$) of the armature (**31**), as a function in particular of the rotational speed (Ω) of the rotor assembly (**3**) and of the linear setting (β),
the processing means further comprise:

- a torque calculation unit (**14**) for calculating a torque ($C_{cold}$) referred to as cold, as a function in particular of the current ($I_{measured}$) in the inductor circuit (**4**) and the rotational speed (Ω) of the rotor assembly (**3**), characteristic of an operation of the equipment without the influence of temperature;
- a unit (**15**) for calculating a reduction factor (**R**), as a function in particular of the rotational speed (Ω) of the rotor assembly (**3**) and the temperature ($T_R$) of the armature (**31**), characteristic of the influence of temperature on the operation of the equipment;
- a unit (**16**) for calculating a torque ($C_{hot}$) referred to as hot, as a function in particular of the product of the cold torque ($C_{cold}$) and the reduction factor (**R**), characteristic of the actual retarding torque provided by the equipment,

wherein the temperature ($T_R$) of the armature (**31**) is calculated by a successive approach, the value of the temperature ($T_R$) of the armature (**31**) at a given time depending in particular on the value of the temperature ($T_R$) of the armature (**31**) calculated at the previous time (**t-1**), the setting (β) and the rotational speed (Ω) of the stator assembly (**2**) at the given time (**t**) or at the previous time (**t-1**), wherein the unit (**14**) for calculating the hot torque can be arranged in order to calculate the cold torque at a given time (t) according to the following formula:

$$C_{cold} = \frac{\alpha}{\left[ (\frac{\Omega}{\Omega_0})^\gamma + (\frac{\Omega_0}{\Omega})^\delta \right]}$$

in which:

$$\alpha = f_1 \times I_{pc} + f_2,$$

$$\Omega_0 = g_1 \times I_{pc} + g_2,$$

$$\gamma = h_1 \times I_{pc}^3 + h_2 \times I_{pc}^2 + h_3 \times I_{pc} + h4,$$

Ω is the rotational speed of the rotor assembly at the given time t or at the previous time t-1,
Where
$f_1$, $f_2$, $g_1$, $g_2$, $h_1$, $h_2$, $h_3$ are constant coefficients,
$I_{pc}$ is a value of the maximum strength of the current available in the inductor circuit as a function of the linear supply setting.

2. Equipment (**1**) according to claim 1, in which the control means (**6**) comprise a manual or foot control device capable of adopting an infinity of positions between two extreme positions.

3. Equipment (**1**) according to claim 1 or claim 2, in which the control means (**6**) comprise an electronic control unit.

4. Equipment (**1**) according to any one of the preceding claims, in which the armature (**31**) is carried by the rotor assembly (**3**) and the inductor windings (**23**) are carried by the stator assembly (**2**).

5. Equipment (**1**) according to claim 4, in which the unit (**13**) for calculating the temperature (**T<sub>R</sub>**) of the armature (**31**) is arranged in order to calculate the temperature (**T<sub>R</sub>**) of the armature according to the following formula:

$$T_R(t) = T_R(t-1) + a \times K_p \times \left[ b \times \Omega + c \times T_R(t-1) + d \times \Omega \times T_R(t-1) + e \times T_R(t-1)^2 \right]$$

in which:

$T_R(t)$ is the temperature of the armature at the given time t,
$T_R(t-1)$ is the temperature of the armature at the previous time t-1,
$\Omega$ is the rotational speed of the rotor assembly at the given time or at the previous time,

$$b = b_1 + \dfrac{16 \times b_2 \times \beta}{4 + \dfrac{b_{var}}{16 \times \beta - 0.01}} \, ,$$

$$c = c_1 + 4 \times c_2 \times \beta \, ,$$

$$d = d_1 + 4 \times d_2 \times \beta \, ,$$

$$e = e_1 + 4 \times e_2 \times \beta \, ,$$

$$K_P = 1 + (K_{P0} - 1) \times \dfrac{\Omega}{3000} \, ,$$

a, $b_1$, $b_2$, $b_{var}$, $c_1$, $c_2$, $d_1$, $d_2$, $e_1$, $e_2$ and $K_{P0}$ are constant coefficients,
$\beta$ denotes the linear supply setting, expressed as a percentage, applied to the excitation means.

6. Equipment (**1**) according to claim 4 or claim 5, in which the unit (**15**) for calculating the reduction factor (**R**) is arranged in order to calculate the reduction factor (**R**) at a given time (**t**) according to the following formula :

$$R = j \times \ln(\Omega) + k$$

in which:

$$j = j_1 \times T_R(t)^4 + j_2 \times T_R(t)^3 + j_3 \times T_R(t)^2 + j_4 \times T_R(t) + j_5 \, ,$$

$$k = k_1 \times T_R(t)^4 + k_2 \times T_R(t)^3 + k_3 \times T_R(t)^2 + k_4 \times T_R(t) + k_5 \, ,$$

$T_R(t)$ is the temperature of the armature calculated at the given time t,
$\Omega$ is the rotational speed of the rotor assembly at the given time t or at the previous time t-1,
$j_1$ to $j_5$ and $k_1$ to $k_5$ are constant coefficients.
Where

$f_1$, $f_2$, $g_1$, $g_2$, $h_1$, $h_2$, $h_3$ are constant coefficients,
$I_{pc}$ is a value of the maximum strength of the current available in the inductor circuit (**4**) as a function of the linear supply setting ($\beta$).

7. Equipment (**1**) according to claim 6, in which the unit (**16**) for calculating the hot torque (**$C_{hot}$**) is arranged in order to calculate the hot torque (**$C_{hot}$**) at a given time (t) according to the following formula:

$$C_{hot} = C_{cold} \times R$$

8. Equipment (**1**) according to one of claims 1 to 7, in which the excitation means (**7**) comprise a power regulator connected on the one hand to the power source (**5**) and on the other hand to the inductor circuit (**4**).

9. Method for calculating, at a given time (**t**), an actual braking torque used by an eddy current retarder equipment (**1**) capable of being carried on board a vehicle according to any one of claims 1 to 10, comprising the following steps:

   - measuring the strength of the current (**$I_{measured}$**) in the inductor circuit (**4**);
   - measuring the rotational speed ($\Omega$) of the rotor assembly (**3**);
   - evaluating the temperature of the armature, as a function in particular of the rotational speed ($\Omega$) of the rotor assembly (**3**) and the linear setting ($\beta$);
   - calculating a torque (**$C_{cold}$**) referred to as cold, as a function in particular of the current (**$I_{measured}$**) in the inductor circuit (**4**) and of the rotational speed ($\Omega$) of the rotor assembly (**3**), characteristic of an operation of the equipment without the influence of temperature;
   - calculating a reduction factor (**R**), as a function in particular of the rotational speed ($\Omega$) of the rotor assembly (**3**) and of the temperature (**$T_R$**) of the armature (**31**), characteristic of the influence of temperature on the operation of the equipment;
   - calculating a torque (**$C_{hot}$**) referred to as hot as a function in particular of the product of the cold torque (**$C_{cold}$**) and the reduction factor (**R**), characteristic of the actual braking torque provided by the equipment., **characterised in that** it further comprises the following step:

      - calculating a torque (**$C_{cold}$**) referred to as cold as a function in particular of the current (**$I_{measured}$**) in the inductor circuit (**4**) and
      - calculating the temperature (**$T_R$**) of the armature (**31**) by a successive approach, the value of the temperature (**$T_R$**) of the armature (**31**) at a given time depending in particular on the value of the temperature (**$T_R$**) of the armature (**31**) calculated at the previous time (**t-1**), the setting ($\beta$) and the rotational speed ($\Omega$) of the stator assembly (**2**) at the given time (**t**) or at the previous time (**t-1**);
      - calculating the cold torque at a given time (t) according to the following formula:

$$C_{cold} = \frac{\alpha}{\left[ (\frac{\Omega}{\Omega_0})^\gamma + (\frac{\Omega_0}{\Omega})^\delta \right]}$$

      in which:

$$\alpha = f_1 \times I_{pc} + f_2,$$

$$\Omega_0 = g_1 \times I_{pc} + g_2,$$

$$\gamma = h_1 \times I_{pc}^3 + h_2 \times I_{pc}^2 + h_3 \times I_{pc} + h_4,$$

      $\Omega$ is the rotational speed of the rotor assembly at the given time t or at the previous time t-1,
      Where
      $f_1$, $f_2$, $g_1$, $g_2$, $h_1$, $h_2$, $h_3$ are constant coefficients,
      $I_{pc}$ is a value of the maximum strength of the current available in the inductor circuit as a function of the linear supply setting ($\beta$).

FIG. 1

FIG. 2

FIG. 3

EP 3 010 747 B1

**EP 3 010 747 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0603038 A
- EP 0660502 A
- JP 2008054451 A
- CN 102540960